# EUROPÄISCHE PATENTANMELDUNG

(11) **EP 2 522 966 A2**
(43) Veröffentlichungstag der Anmeldung: **14.11.2012**
(21) Anmeldenummer: 12003041.6
(22) Anmeldetag: 02.05.2012
(51) Int. Cl.: G01H 1/00

(54) **Vorrichtung und Verfahren zur Ermittlung eines Schallemissionspegels**

(30) Priorität: 09.05.2011 DE 102011101044
(71) Anmelder: CAE Engineering und Service GmbH, 59269 Beckum (DE)
(72) Erfinder: Zurmühlen, Nico, 33335 Gütersloh (DE); Kohn, Kai-Uwe, 33378 Rheda-Wiedenbrück (DE); Bax, Matthias, 33813 Oerlinghausen (DE)
(74) Vertreter: Schütte, Hartmut

(57) **Zusammenfassung**

Vorrichtung und Verfahren zur Ermittlung des Schallemissionspegels einzelner Räder eines vorbeifahrenden mehrachsigen Fahrzeugs. Dabei ist eine Messeinrichtung zum Erfassen eines Eingangssignals und eine Analyseeinrichtung zur Auswertung eines von der Messeinrichtung ausgegebenen Ausgangssignals vorgesehen. Die Messeinrichtung umfasst wenigstens zwei Mikrofone, deren Signalleitungen so miteinander verschaltet sind, dass die von den Mikrofonen ausgegebenen Einzelsignale zu einem gemeinsamen Ausgangssignal vereint werden. Das Ausgangssignal endet auf einer einzigen gemeinsamen Signalleitung, die mit einer Analyseeinrichtung in Verbindung steht.

## Beschreibung

Die vorliegende Erfindung betrifft eine Vorrichtung zur Ermittlung des Schallemissionspegels einzelner Räder eines vorbeifahrenden mehrachsigen Fahrzeuges, ein Verfahren zur Ermittlung des Schallemissionspegels einzelner Räder eines vorbeifahrenden mehrachsigen Fahrzeuges und eine Messeinrichtung.

Bei dem Betreiben von Fahrzeugen kommt es nahezu zwangsläufig zu einer Schallemission, die sich aus der Geräuschabstrahlung verschiedener Einzelquellen zusammensetzt. Dabei können zum Beispiel Geräusche durch den Antrieb, durch verwirbelte Luftströme und insbesondere auch durch das Laufgeräusch der Fahrzeugräder verursacht werden.

Die Geräuschemission der Fahrzeugräder spielt dabei insbesondere bei Schienenfahrzeugen bzw. spurgebundenen Fahrzeugen eine erhebliche Rolle. Da sowohl die Laufräder eines Schienenwaggons als auch die Schienen selbst aus Metall bestehen, kommt es beim Zusammenwirken von Schiene und Laufrad an sich schon zu einer relativ hohen Geräuschentwicklung, die weiterhin erheblich von dem Zustand der Laufflächen sowohl der Schienen als auch der Laufräder abhängt.

Polygone Räder beispielsweise, also Räder die Abflachungen an der Lauffläche aufweisen, führen zu einer wesentlich höheren Geräuschemission als ideal runde Laufräder. Auch eine Riffelung der Lauffläche kann sich negativ auf die Geräuschemission auswirken. Solche Abflachungen oder Riffelungen können durch Verschleiß, Notbremsungen oder andere ungünstige Einwirkungen zwischen Schiene und Laufrad oder Bremse und Laufrad entstehen.

Dabei spielt auch die Art des Bremssystems für den Zustand der Lauffläche eines Rades eine Rolle. Laut Eisenbahnbundesamt sind zum Beispiel in Deutschland für Eisenbahnen mit einer Höchstgeschwindigkeit über 50 km/h durchgehende und selbstständige Bremsen vorgeschrieben. Dazu müssen Eisenbahnen mit Druckluftbremsen ausgestattet sein, die in Verbindung mit einer Klotz- oder einer Scheibenbremse betrieben werden können. Das Luftdruckbremssystem kann durch zusätzliche Bremssysteme unterstützt werden.

Die Verwendung einer Scheibenbremse ist durch das Eingreifen der Bremse an Bremsscheiben relativ schonend für die Lauffläche der Räder, da beim Bremsen lediglich Bremsklötze und Bremsscheiben zusammenwirken. Die Lauffläche eines Rades ist durch die Verwendung einer Scheibenbremse nicht direkt betroffen.

Bei der Verwendung einer Klotzbremse wird allerdings ein Bremsklotz bei einem Bremsvorgang direkt auf die Lauffläche des Laufrades gepresst, wodurch das Rad abgebremst wird. Je nach verwendeter Bremsklotzart können auf Dauer dadurch Schäden bzw. Rauheiten und Riffelungen an den Laufflächen der Räder entstehen, die sich negativ auf die Geräuschentwicklung auswirken können. Ein Bremssystem aus Grauguss kann dabei eine erhebliche Abnutzung der Lauffläche eines Rades verursachen, wodurch die Geräuschemission ansteigt. Die Verwendung von K-Sohlen-Bremsen, bei denen die Bremsklötze aus einem speziellen Kunststoff bestehen, arbeitet hingegen wesentlich schonender.

Die Wartung abgeflachter Laufräder ist sehr zeit- und kostenintensiv. Insbesondere bei Güterzügen wird daher auf ein leises Vorankommen nicht immer besonders geachtet. Dies führt oft zu einer hohen Geräuschemission von Güterzügen, was Nachteile besonders für Anwohner an Gleisanlagen zur Folge haben kann.

Beispielsweise in Deutschland muss die Deutsche Bahn daher sehr hohe Investitionen in den Lärmschutz tätigen, um den immer weiter steigenden Anforderungen bezüglich Anwohnerschutz und Umweltschutz gerecht zu werden. Es ist daher eine Umlage dieser Kosten auf die Betreiber von Schienenfahrzeugen geplant, die durch emissionsabhängige Trassenpreise durchgesetzt werden sollen.

Dazu könnte im einfachsten Fall ein Waggon-bezogener Trassenpreis vorgesehen sein, der über die Art der benutzten Bremse berechnet wird. Diese Art der Berechnung stellt allerdings eine sehr ungenaue Methode dar. Bei einer solchen Ermittlung der Emission würde prinzipiell von einer höheren Lärmbelastung durch Waggons mit einer Klotzbremse ausgegangen, was aber nicht zwangsläufig der Fall sein muss. Weiterhin kann von außen nicht ohne Weiteres erkannt werden, ob eine Klotzbremse mit Bremsklötzen aus Kunststoff oder Grauguss ausgerüstet ist. Auch dadurch könnten Schwierigkeiten bei der Überprüfung entstehen, ob ein Waggon zum Beispiel mit K-Sohlen-Bremsen ausgestattet ist.

Wesentlich genauer und effektiver wäre die Bestimmung der Schallemission einzelner Räder. Darüber könnte die Schallemission einzelner Achsen, Drehgestelle, Waggons oder auch ganzer Züge leicht und sehr exakt bestimmt werden.

Für die Berechnung der Kosten für die Trassenbenutzung könnte das Schienensystem in bestimmte Streckenabschnitte aufgeteilt werden. Wie schon für Autobahnen bekannt, könnten analog zu den Mautstationen an bestimmten Punkten im Schienennetz Messstationen installiert werden, die sowohl eine Wagenkennung als auch die Geräuschemission ermitteln. Daraus könnte später eine bestimmte, emissionsabhängige Gebühr berechnet werden.

Es sind Mikrofonsysteme bekannt geworden, mit denen über Beamforming eine gerichtete Bestimmung der Schallemission einzelner Räder möglich ist. Dazu ist bei den bekannten Systemen eine Mehrzahl von Mikrofonen vorgesehen, wobei die gemessenen Schalldruckpegel zum Beispiel über Beamforming ausgewertet werden. Daraus ergibt sich eine gerichtete Empfindlichkeit des Systems, wodurch das Array auf die Schallemission eines einzelnen Rades fokussiert werden kann.

Nachteilig bei diesen bekannten Systemen ist, dass für eine genaue Auswertung eine größere Anzahl von Mikrofonen benötigt wird. Der Aufbau als Beamforming-Array führt zu erheblichen Kosten, die für einen großflächigen Einsatz im Schienennetz nicht realisierbar wären. Denn die Signale der Mikrofone müssen mit einem Computer einzeln erfasst, digitalisiert und verarbeitet werden, um die einzelnen Signale dann mittels einer Software unter Berücksichtigung der Laufzeitdifferenz auszuwerten.

Vor dem Hintergrund des beschriebenen Standes der Technik ist es daher die Aufgabe der vorliegenden Erfindung, ein System zur Verfügung zu stellen, mit dem die Schallemission einzelner Räder in kostengünstigerer Weise ermöglicht wird.

Diese Aufgabe wird gelöst durch eine Vorrichtung zur Ermittlung des Schallemissionspegels einzelner Räder eines vorbeifahrenden Fahrzeuges mit den Merkmalen des Anspruchs 1, durch ein Verfahren zur Ermittlung des Schallemissionspegels einzelner Räder eines vorbeifahrenden Fahrzeuges mit den Merkmalen des Anspruchs 13 und durch eine Messeinrichtung gemäß den Merkmalen des Anspruchs 15. Bevorzugte Weiterbildungen sind Gegenstand der Unteransprüche. Weitere vorteilhafte Merkmale und Ausgestaltungen ergeben sich aus der Beschreibung des Ausführungsbeispiels.

Die erfindungsgemäße Vorrichtung eignet sich zur Ermittlung des Schallemissionspegels einzelner Räder eines vorbeifahrenden mehrachsigen Fahrzeugs. Dazu umfasst die Vorrichtung wenigstens eine Messeinrichtung zum Erfassen eines Eingangssignals und wenigstens eine Analyseeinrichtung zur Auswertung eines von der Messeinrichtung ausgegebenen Ausgangssignals. Die Messeinrichtung umfasst wenigstens zwei Mikrofone, deren Signalleitungen so miteinander verschaltet sind, dass die von den Mikrofonen ausgegebenen Einzelsignale zu einem gemeinsamen Ausgangssignal vereint auf einer einzigen gemeinsamen Signalleitung enden. Die gemeinsame Signalleitung steht mit der Analyseeinrichtung in Verbindung und führt dieser das Ausgangssignal zu.

Die erfindungsgemäße Vorrichtung zur Ermittlung des Schallemissionspegels hat viele Vorteile. Ein erheblicher Vorteil der erfindungsgemäßen Vorrichtung ist, dass die Einzelsignale der Mikrofone zu einem gemeinsamen Ausgangssignal auf einer gemeinsamen Signalleitung enden, wodurch ein einziges Gesamtsignal der Messeinrichtung ausgegeben wird. Dadurch entsteht ein kostengünstiges unidirektionales Mikrofonarray, das durch die Verschaltung der Mikrofone eine Richtcharakteristik aufweist.

Durch die Laufzeitdifferenzen der Schallwellen zwischen den Mikrofonen der Messeinrichtung kommt es zur Reduktion bzw. Auslöschung von seitlich eingestrahlten Signalen, da sich unterschiedliche Phasenlagen gegenseitig aufheben. Dies ist durch die hardwaremäßige Aufeinanderschaltung der Mikrofone möglich. Als Mikrofone können normale Kondensatormikrofone verwendet werden, deren Kapseln beispielsweise bis 10 kHz ausgelegt sind. Schon hierdurch können die Kosten für eine Vorrichtung gemäß der vorliegenden Erfindung gesenkt werden. Besonders vorteilhaft können aber auch piezoelektrische Mikrofone verwendet werden. Es werden allerdings keine Mikrofone benötigt, die an sich schon eine Richtcharakteristik aufweisen, die Verwendung solcher Mikrofone kann sich allerdings unter Umständen positiv auf das Messergebnis auswirken.

Eine Richtcharakteristik ist zwar auch durch Beamforming möglich, allerdings entstehen dabei wesentlich höhere Kosten, da ein viel größer Aufwand an Hardware erforderlich ist. Durch die gemeinsame Signalleitung der Mikrofone gemäß der vorliegenden Erfindung sind zum Beispiel nur ein Analog-Digital-Wandler und eine Spannungsversorgung nötig, um das Ausgangssignal in eine für die Analyseeinrichtung verwertbare Form zu bringen.

Beim Beamforming wäre für jedes Mikrofon ein Analog-Digital-Wandler von Nöten, da die Signale einzeln der Analyseeinrichtung zugeführt werden müssen, damit eine spezielle Software das Beamforming durchführen kann. Weiterhin ist ein sehr rechenstarker Computer erforderlich, um die vielen Einzelsignale unter Berücksichtigung der Laufzeitdifferenz zu verarbeiten.

Durch die erfindungsgemäße Vorrichtung wird ein einfaches und zuverlässiges System zur gerichteten und selektiven Ermittlung der Schallemission zur Verfügung gestellt.

Die analogen Signale der Mikrofone einer Messeinrichtung werden zu einem einzigen analogen Signal zusammen geschaltet. Die gemeinsame Signalleitung leitet deshalb ein gemeinsames analoges Signal der Mikrofone weiter. Deshalb ist nur eine Analyse des gemeinsamen Signals möglich, nicht aber eine Analyse der Signale der einzelnen Mikrofone, denn sie stehen einzeln nicht zur Verfügung.

In bevorzugten Ausgestaltungen sind mehrere Messeinrichtungen vorgesehen, um einen bestimmten Bereich zu erfassen. Der Messbereich kann dabei zum Beispiel dem Umfang eines zu messenden Rades entsprechen.

Durch eine solche Ausgestaltung wird es zum Beispiel möglich, die gleichen Mikrofonarrays für unterschiedliche Gegebenheiten einzusetzen. Der Abstand der Messeinrichtung zu dem zu messenden Objekt bestimmt, wie groß der Bereich ist, der von der Messeinrichtung erfasst werden kann. Je näher die Messeinrichtung an dem zu messenden Objekt vorgesehen ist, umso kleiner ist der Erfassungswinkel, der von der Messeinrichtung detektiert wird. Da im Normalfall die Schallemission der gesamten Lauffläche eines vorbeifahrenden Rades aufgenommen werden soll, müssten für verschiedene Anordnungen unterschiedlich lange Mikrofonarrays verwendet werden.

Durch das Benutzen mehrerer Messeinrichtungen, die in besonders bevorzugten Ausgestaltungen überlappend angeordnet sind, können standardisierte Messeinrichtungen verwendet werden. Je nach Bedarf werden dann mehr oder weniger Mikrofonarrays benutzt, um auf die gewünschte Messstrecke zu gelangen.

Bei einem ausreichenden Abstand zum Gleis kann die Verwendung von nur einer Messeinrichtung ausreichend sein, insbesondere auch aus Kostengründen. Sollte die Installation nur relativ nah am Gleis erfolgen können, kann der geringere Abstand durch die Verwendung mehrerer Messeinrichtungen ausgeglichen werden.

Es ist zudem bevorzugt und vorteilhaft, dass wenigstens zwei Messeinrichtungen vorgesehen sind und die Messeinrichtungen unterschiedliche Mikrofonabstände und/oder unterschiedliche Entfernungen zu einem Gleis aufweisen.

Durch die Verwendung von Messeinrichtungen mit unterschiedlich beabstandeten Anordnungen der Mikrofone und/oder einer unterschiedlichen Entfernung der Installation zum Gleis könnten die Messeinrichtungen auf unterschiedliche Frequenzbereiche optimiert werden und/oder auch Räder mit sehr unterschiedlichen Durchmessern gemessen werden. Dies ist insbesondere für Test- bzw. Messstrecken vorteilhaft.

Auch die Verwendung der verschiedenen Messeinrichtungen zusammen ist denkbar. Dann könnten die ermittelten Werte verglichen werden, um besonders genaue Ergebnisse zu erlangen oder Fehler eines Systems zu entdecken.

Es ist weiterhin bevorzugt, dass bei der Verwendung mehrerer Messeinrichtungen wenigstens eine Messeinrichtung höhenversetzt zu wenigstens einer anderen Messeinrichtung angeordnet ist. Dabei können die Messeinrichtungen vorteilhafter Weise im Wesentlichen parallel zueinander vorgesehen sein. Aber auch leicht geneigte oder gedrehte Anordnungen der Messeinrichtungen zueinander können unter Umständen einen vorteilhaften Effekt erzielen.

Damit die Analyseeinrichtung das Ausgangssignal verarbeiten kann, ist in bevorzugten Ausgestaltungen zwischen der Messeinrichtung und der Analyseeinrichtung ein Analog-Digital-Wandler vorgesehen.

Durch das Zusammenschalten der Einzelsignale der Mikrofone jeweils einer Messeinrichtung zu einem Gesamtsignal ist eben nur noch ein Analog-Digital-Wandler pro Messeinrichtung nötig, der das Signal für die Weiterverarbeitung in der Analyseeinrichtung umwandelt. Dabei kann jede Messeinrichtung beliebig viele Mikrofone aufweisen. Natürlich können auch mehrere A/D-Wandler vorgesehen sein, dies ist allerdings nicht nötig.

Es kann ein separater A/D-Wandler der Analyseeinrichtung vorgeschaltet sein, allerdings kann in bevorzugten Weiterbildungen der A/D-Wandler auch in die Analyseeinrichtung integriert sein.

Vorzugsweise umfasst die Analyseeinrichtung eine Auswerteeinheit und eine Steuereinheit. Im einfachsten Fall kann dazu ein Computer vorgesehen sein, über den sowohl die Steuerung des Messvorgangs, als auch die Auswertung der ermittelten Daten erfolgt. Allerdings können die Steuereinheit und die Auswerteeinheit auch zwei getrennte Geräte betreffen, die miteinander verbunden sein können.

Besonders bevorzugt ist, dass die ausgegebenen Einzelsignale der Mikrofone über wenigstens einen Kondensator aufeinander geschaltet sind. Es ist aber natürlich im einfachsten Fall auch möglich, die Kabel bzw. Drähte der einzelnen Mikrofone einfach miteinander zu verdrillen.

Die Messeinrichtung umfasst vorteilhafter Weise eine Trägereinheit, auf der die Mikrofone angeordnet sind. Besonders geeignet dazu ist eine Platine. Möglich und sinnvoll ist aber jede zweckgemäße Trägereinheit, auf der die Mikrofone angeordnet werden können.

Vorzugsweise umfasst die Messeinrichtung weiterhin ein Gehäuse. In dem Gehäuse kann dann zum Beispiel die Trägereinheit mit den darauf angeordneten Mikrofonen aufgenommen werden. Dadurch sind die Mikrofone bzw. die gesamte Technik der Messeinrichtung effektiv vor schädlichen Eingriffen durch zum Beispiel Tiere, aufgewirbelte Gegenstände oder Wettereinflüsse geschützt. So kann von einer langen Haltbarkeit der Messeinrichtung ausgegangen werden.

Um eine besonders effektive Richtcharakteristik der Messeinrichtung zu erzielen, können die einzelnen Mikrofone der Messeinrichtung einen bestimmten Einfallswinkel aufweisen. Die eigentliche Richtwirkung der Messeinrichtung entsteht jedoch schon durch die Laufzeitdifferenz der Schallwellen zwischen den einzelnen Mikrofonen und die dadurch resultierende Reduktion bzw. Auslöschung unterschiedlicher Phasenlagen.

Dabei ist die Richtcharakteristik der Messeinrichtung frequenzabhängig und abhängig von der Anzahl der verwendeten Mikrofone. In der Regel gilt, dass der erfassbare Frequenzbereich der Messeinrichtung mit der Anzahl der verwendeten Mikrofone steigt. Je größer die Frequenz, um so kleiner muss der Abstand zwischen den Mikrofonen sein, um eine Richtcharakteristik in dem Frequenzbereich zu erreichen.

Versuche haben beispielsweise für ein lineares Array von einem Meter Länge ergeben, dass bei der Verwendung von 48 Mikrofonen der Frequenzbereich bis 8 kHz gut fokussiert wird. Dabei kann in bevorzugten Ausgestaltungen ein frequenzabhängiger Erfassungswinkel alpha durch den Abstand der einzelnen Mikrofone definiert werden. Für die gerade beschriebene Messeinrichtung beträgt der Erfassungswinkel bevorzugt 30°. Aber auch andere Erfassungswinkel können je nach Bandbreite der zu erfassenden Frequenzen sinnvoll und vorteilhaft sein.

Die Anordnung der Mikrofone an der Messeinrichtung ist bevorzugt im Wesentlichen linear. Dabei ist es vorteilhaft, dass die Messeinrichtung bzw. die lineare Anordnung der Mikrofone horizontal entlang der Messstrecke ausgerichtet wird. Durch eine solche eindimensionale Anordnung entsteht eine rotatorische Richtwirkung entlang des Erfassungswinkels. Zwar ist dadurch keine direkte vertikale Richtwirkung auf den Bereich der Räder gegeben, eine überwiegende Fokussierung kann allerdings durch die Anordnung der Messeinrichtung auf Höhe der Räder erzielt werden.

Auch die gleichmäßige Verteilung der Mikrofone, also die gleichmäßige Beabstandung der Mikrofone zueinander auf der Messeinrichtung, ist bevorzugt.

Zwar können unter Umständen sowohl eine nicht lineare als auch eine ungleichmäßige Anordnung der Mikrofone auf einer Messeinrichtung vorteilhaft sein, allerdings ist schon eine lineare und gleichmäßige Anordnung der Mikrofone auf der Messeinrichtung sehr effektiv und zudem sehr kostengünstig herzustellen.

Für gewisse Anwendungen kann aber auch eine nicht lineare Anordnung der Mikrofone sinnvoll sein. Daher ist es in anderen Ausgestaltungen auch bevorzugt, dass die Mikrofone zweidimensional angeordnet sind. Dadurch kann auch eine Richtwirkung neben dem Erfassungswinkel in vertikaler Richtung auf beispielsweise auf die Räder erfolgen. In anderen Ausgestaltungen kann auch eine dreidimensionale Anordnung der Mikrofone vorteilhaft sein.

Zum Beispiel kann man durch die Anordnung der Mikrofone auf einer zwei- oder dreidimensionalen Fläche zum Beispiel eine keulenförmige Richtcharakteristik auf den Bereich der Schiene erreichen. Eine weitere Fokussierung in horizontaler Richtung erfolgt über die Richtcharakteristik durch die Auslöschung der unterschiedlichen Phasenlagen.

Um die genaue Schallemission eines vorbeifahrenden Rades zu ermitteln, ist es bevorzugt, dass der von der Messeinrichtung abgedeckte Bereich wenigstens dem Umfang des zu messenden Rades entspricht. Dadurch wird jeder Bereich der Lauffläche eines Rades bei der Ermittlung der Schallemission berücksichtigt.

Bei Rädern von Zügen kommt es beispielsweise zu einer stark erhöhten Geräuschentwicklung, wenn Abflachungen in der Lauffläche vorhanden sind. Würde der Messbereich nicht die gesamte Lauffläche des Rades abdecken, könnte unter Umständen ein wesentlicher Teil der Schallemission nicht berücksichtigt werden.

Um den gesamten Radumfang bei der Messung zu berücksichtigen, können wie schon erwähnt auch mehrere Messeinrichtungen vorgesehen sein, die insbesondere überlappend angeordnet sind. Dabei können die einzelnen Mikrofone der einzelnen Messeinrichtungen selektiv aufeinander geschaltet werden, um einen idealen Messbereich abzudecken.

Damit nicht ständig Signale aufgenommen werden müssen und um den Messvorgang ideal auf die Geschwindigkeit des vorbeifahrenden Fahrzeuges abzustimmen, ist in besonders bevorzugten Ausgestaltungen dem Analog-Digital-Wandler und/oder der Steuereinheit bzw. der Analyseeinrichtung eine Auslöseeinheit zugeordnet. Dabei ist es zweckmäßig, dass die Auslöseeinheit der Messeinrichtung insbesondere vorgeordnet ist. Diese Einheit kann jede Art von Sensor sein, zum Beispiel ein Trigger an oder auf der Schiene oder zum Beispiel auch eine Lichtschranke. Ein spezieller Trigger auf der Schiene könnte zum Beispiel nicht nur ein vorbeifahrendes Fahrzeug ankündigen, sondern sogar auch die genaue Position von einzelnen Rädern an die Analyseeinrichtung oder den Analog-Digital-Wandler übermitteln.

Da eine Separation einzelner Räder besonders gut unter Berücksichtigung der Geschwindigkeit eines Zuges erreicht werden kann, ist bevorzugt die Verwendung einer Auslöseeinheit vorgesehen, die die Geschwindigkeit des vorbeifahrenden Fahrzeuges ermitteln kann. Dazu eignen sich zum Beispiel die Verwendung von wenigstens zwei voneinander beabstandeten Sensoren mit einem bekannten Abstand.

Die Mikrofone an der Messeinrichtung müssen den zu ermittelnden Schallemissionen frei zugänglich sein. Dennoch ist es bevorzugt, dass die gesamte Messeinrichtung wetterfest vorgesehen ist. Eine solche Wetterfestigkeit kann zum Beispiel durch ein dementsprechend ausgerichtetes Gehäuse erreicht werden. Allerdings sollten die Mikrofone weiterhin frei zugänglich sein. Die Schallaufnahme darf nicht bzw. nicht wesentlich beeinträchtigt werden.

Die Abdeckung dieses Bereichs kann im einfachsten Fall mittels einer Klarsichtfolie erfolgen. Natürlich sind auch speziell angefertigte Abdeckungen aus einem zum Beispiel wetterfesten aber natürlich im Wesentlichen schalldurchlässigen Material vorteilhaft und bevorzugt.

Des Weiteren ist in bevorzugten Ausgestaltungen der Analyseeinrichtung eine Einrichtung zur Identifizierung des zu messenden Fahrzeugs zugeordnet. Dazu kann zum Beispiel eine Art Barcodescanner vorgesehen sein, der einen an dem vorbeifahrenden Fahrzeug angebrachten Barcode ablesen könnte. Auch eine Kamera, die zum Beispiel eine Zug- oder Waggonnummer erkennt, kann vorteilhaft genutzt werden. Auch andere zweckmäßige Einrichtungen zur Identifizierung, wie zum Beispiel ein Empfänger, der ein von dem vorbeifahrenden Fahrzeug gesendetes Funksignal empfängt, ist denkbar.

Das erfindungsgemäße Verfahren dient zur Ermittlung des Schallemissionspegels einzelner Räder eines vorbeifahrenden mehrachsigen Fahrzeugs. Dazu wird eine Vorrichtung benutzt, die wenigstens eine Messeinrichtung mit wenigstens zwei Mikrofonen zum Erfassen eines Eingangssignals und wenigstens eine Analyseeinrichtung zur Auswertung eines von der Messeinrichtung ausgegebenen Ausgangssignals umfasst. Mittels der Vorrichtung wird der Schallemissionspegel wenigstens eines einzelnen Rades von den Mikrofonen erfasst. Die über die Signalleitungen der Mikrofone ausgegebenen Einzelsignale werden dazu zu einem gemeinsamen Ausgangssignal vereint, das über eine einzige gemeinsame Signalleitung an die Analyseeinheit übermittelt wird.

Das erfindungsgemäße Verfahren bietet viele Vorteile. Ein erheblicher Vorteil ist, dass durch das Zusammenschalten der Einzelsignale der einzelnen Mikrofone zu einem Gesamtsignal eine Richtcharakteristik der Messeinrichtung entsteht.

Durch die Laufzeitdifferenzen der Schallwellen zwischen den Mikrofonen der Messeinrichtung kommt es zur Reduktion bzw. Auslöschung von seitlich eingestrahlten Signalen, da sich die unterschiedlichen Phasenlagen gegenseitig aufheben können. Dies ist durch die hardwaremäßige Aufeinanderschaltung der Mikrofone möglich.

Es entsteht eine kostengünstige Richtcharakteristik der Messeinrichtung, die im Wesentlichen nur die frontal in die Mikrofone einfallenden Schallwellen zu einem Gesamtsignal addiert, da sich seitlich einfallende Wellen eliminieren.

Weiterhin wird durch ein solches Verfahren nicht nur der Pegel der Schallemission ermittelt, sondern ein Geräusch aufgenommen. Dadurch kann nicht nur durch eine Pegelspitze auf zum Beispiel eine Abflachung in der Lauffläche des Rades eines Zuges geschlossen werden, sondern es kann spezifisch über das entsprechende Geräusch eine Schadensdiagnose gestellt werden.

Dabei wird in bevorzugten Ausgestaltungen der Schallemissionspegel der im Wesentlichen gesamten Lauffläche wenigstens eines Rades erfasst. Durch das Erfassen der gesamten Lauffläche eines Rades wird erreicht, dass die gesamte Schallemission eines Rades detektiert wird. Wie schon beschrieben, können große Emissionspegel durch Abflachungen in der Lauffläche eines Rades entstehen. Sollte nicht die gesamte Lauffläche erfasst werden, könnte eine solche Abflachung durch Zufall Weise nicht bei der Ermittlung der Schallemission berücksichtigt werden.

Die erfindungsgemäße Messeinrichtung umfasset wenigstens eine Trägereinheit auf der wenigstens eine Mehrzahl von Mikrofonen zum Erfassen eines Eingangssignals angeordnet sind. Die Signalleitungen der Mikrofone sind so miteinander verschaltet, dass die ausgegebenen Einzelsignale der Mikrofone zu einem gemeinsamen Ausgangssignal vereint werden, das auf einer einzigen gemeinsamen Signalleitung endet.

Die erfindungsgemäße Messeinrichtung bietet viele Vorteile. Ein erheblicher Vorteil ist, dass durch das Verschalten der Einzelsignale zu einem Gesamtsignal auf einer Signalleitung ein kostengünstiges unidirektionales Mikrofonarray entsteht. Dadurch wird eine Messeinrichtung zur Verfügung gestellt, die durch die Laufzeitdifferenz zwischen den einzelnen Mikrofonen durch Auslöschung unterschiedlicher Phasenlagen eine Richtcharakteristik aufweist. Da alle Einzelsignale in nur einer Signalleitung enden, ist für die Weiterverarbeitung des Signals nur ein Analog-Digital-Wandler nötig. Dadurch können im Vergleich zum Beamforing erhebliche Mehrkosten zum Beispiel für Hardware eingespart werden.

Um eine besonders effektive Richtcharakteristik der Messeinrichtung zu erzielen, kann über die Anzahl und den Abstand der Mikrofone eine bestimmte Frequenzauflösung vorgegeben werden.

Die erfindungsgemäße Messeinrichtung kann weiterhin gemäß aller zuvor beschrieben Ausgestaltungen der Messeinrichtung weitergebildet sein.

In allen zuvor beschrieben Ausgestaltungen der erfindungsgemäßen Vorrichtung, des erfindungsgemäßen Verfahrens und der erfindungsgemäßen Messeinrichtung zur Ermittlung des Schallemissionspegels ist es auch bevorzugt, dass diese reproduzierbar und auf bestimmte Normen abgestimmt ausgelegt sind. Insbesondere eine Vergleichbarkeit zu der Emissionsmessung gemäß DIN EN ISO 3095 ist dabei sinnvoll und gewünscht. Dazu kann ein weiteres Messsystem vorgesehen sein, das gemäß der Norm einen Gesamtpegel des vorbeifahrenden Fahrzeuges misst, um ein Verhältnis zwischen dem Gesamtpegel und der Geräuschemission einzelner Räder zu ermitteln. Dadurch könnten die ermittelten Werte für eine Bewertung der vorbeifahrenden Fahrzeuge gemäß dieser Norm erfolgen.

Weiterhin kann die erfindungsgemäße Vorrichtung in bevorzugten Weiterbildungen auch dazu genutzt werden, die Schallemission der Ladung eines vorbeifahrenden Fahrzeuges zu detektieren. Auch die Schallemission von verschiedenen Anbauteilen eines Fahrzeugs, wie zum Beispiel einer Klimaanlage, kann so durch die erfindungsgemäße Vorrichtung ermittelt werden.

Weitere Vorteile und Anwendungsmöglichkeiten der vorliegenden Erfindung ergeben sich aus der Beschreibung eines Ausführungsbeispiels, das nun mit Bezug auf die beiliegenden Figuren erläutert wird.

In den Figuren zeigen:
- Fig. 1: eine perspektivische Ansicht der erfindungsgemäßen Vorrichtung zur Ermittlung eines Schallemissionspegels an einer Gleisstrecke in einer stark schematischen Darstellung
- Fig. 2: eine schematische Darstellung einer erfindungsgemäßen Messeinrichtung;
- Fig. 3: eine Draufsicht auf Schienen mit einer erfindungsgemäßen Vorrichtung zur Ermittlung eines Schallemissionspegels in einer stark schematischen Darstellung;
- Fig. 4: die Ansicht aus Figur 2, wobei die Vorrichtung mehrere erfindungsgemäße Messeinrichtungen auf beiden Seiten einer Gleisanlage umfasst;
- Fig. 5: die schematische Darstellung der Detektion des Schallemissionspegels einzelner Räder mit einer erfindungsgemäßen Messeinrichtung;
- Fig. 6: eine Graphik zur Verdeutlichung der Richtwirkung einer erfindungsgemäßen Messeinrichtung;
- Fig. 7: eine weitere Graphik bezüglich der Richtwirkung;
- Fig. 8: eine graphische Darstellung gemessener Effektivwerte (beispielhaft für einen Zug mit mehreren Waggons); und
- Fig. 9: eine Auswertung der Richtwirkung einer Vorrichtung zur Ermittlung einer Schallemission beispielhaft anhand der Analyse einiger Terzbänder.

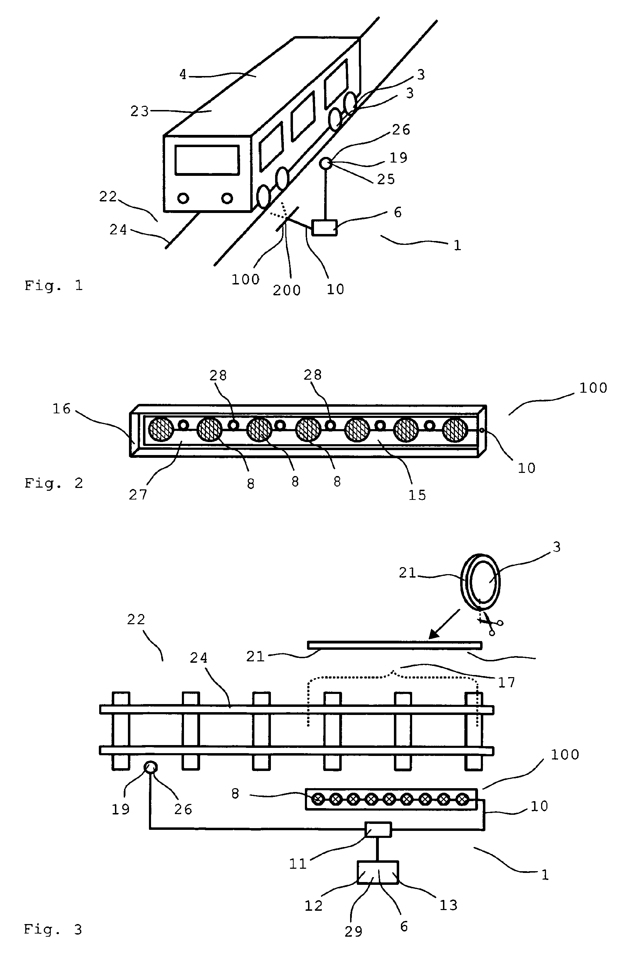

In Fig. 1 ist eine mögliche Installation der erfindungsgemäßen Vorrichtung 1 zur Ermittlung des Schallemissionspegels 2 in einer stark schematischen Ansicht dargestellt. Dabei ist in der gezeigten Darstellung die Verwendung der Vorrichtung 1 an einer Gleisstrecke 22 gezeigt. Ein mehrachsiges Fahrzeug 4, in diesem Fall ein Zug 23, fährt in diesem Beispiel auf Schienen 24 an der Vorrichtung 1 vorbei, die in Fahrtrichtung des Zuges 23 an der linken Seite der Gleisstrecke 22 angeordnet ist.

Natürlich ist die Verwendung der Vorrichtung zur Ermittlung des Schallemissionspegels nicht nur auf Schienenfahrzeuge begrenzt. Denkbar und sinnvoll wäre auch der Einsatz für die Messung der Geräuschentwicklung von Straßenfahrzeugen oder allgemein von bewegten Objekten mit Rädern.

Die Vorrichtung 1 umfasst in dem in Fig. 1 gezeigten Ausführungsbeispiel eine Messeinrichtung 100, die die Schallemission der einzelnen Räder 3 des Zuges 23 detektiert. Die Messeinrichtung 100 ist als Mikrofonarray 200 ausgeführt. Über eine gemeinsame Signalleitung 10 wird ein Ausgangssignal 7 an eine Analyseeinrichtung 6 übergeben, die je nach Begebenheit unmittelbar an der Messeinrichtung 100 oder auch in einem gewissen Abstand zu dieser vorgesehen sein kann. Dabei ist bevorzugt auch ein hier nicht dargestellter Analog-Digital-Wandler 10 zwischen der Messeinrichtung 100 und der Analyseeinrichtung 6 vorgesehen, der die Signale für die Analyseeinrichtung 6 umwandelt.

In der Analyseeinrichtung 6 wird dann aus dem von der Messeinrichtung 100 zur Verfügung gestellten Ausgangssignal 7 der Schallemissionspegel 2 für die einzelnen Räder 3 des vorbeifahrenden Zuges 23 ermittelt.

Um die Auswertung zu erleichtern, kann der Vorrichtung 1 auch eine Auslöseeinheit 19 vorgesehen sein, die zum Beispiel der Analyseeinrichtung 6 das Vorbeifahren eines Zuges 23 anzeigt, oder sogar die Position einzelner Räder 3 erkennen kann. Die Auslöseeinheit kann zum Beispiel ein Trigger 25 an oder auf den Schienen 24 sein, oder auch durch eine Lichtschranke 26 verwirklicht werden. Es ist allerdings die Verwendung jeder Art von Sensor möglich, die zum Erkennen eines bewegten Objektes geeignet ist. Besonders geeignet ist dabei eine Auslöseeinheit 19, die auch die Geschwindigkeit des vorbeifahrenden Zuges ermitteln und an die Analyseeinheit 6 übertragen kann. Dadurch kann die Schallemission einzelner Räder, insbesondere von direkt benachbarten Rädern, besonders gut aufgetrennt werden.

Auch die Verwendung von einer Vorrichtung 1 zur Ermittlung des Schallemissionspegels 2 eines vorbeifahrenden Fahrzeuges 4 auf beiden Seiten der Gleisstrecke 22 ist gewünscht. Dadurch kann die Schallemission der Räder beider Achsseiten detektiert werden. Es würde auch ausreichen, auf beiden Seiten der Gleisstrecke 22 Messeinrichtungen 100 anzuordnen, die dann über je einen Analog-Digital-Wandler 11 pro Messeinrichtung 100 mit einer gemeinsamen Analyseeinrichtung 6 verbunden sein könnten.

In Figur 2 ist beispielhaft eine erfindungsgemäße Messeinrichtung 100 mit sieben Mikrofonen 8 in einer schematischen Darstellung abgebildet. Die Anzahl der Mikrofone 8 kann je nach Einsatzgebiet stark variieren. Der frequenzabhängige Erfassungswinkel alpha ist unter anderem von der Anzahl der verwendeten Mikrofone und dem Abstand der Mikrofone untereinander abhängig. Gute Ergebnisse können beispielsweise mit 48 Mikrofonen erzielt werden, die wie bei der hier gezeigten Messeinrichtung 100 linear angeordnet sind. Eine größere oder auch kleinere Anzahl an Mikrofonen 8 kann je nach Anwendung aber auch vorteilhaft sein.

Die sieben Mikrofone 8 der hier dargestellten Messeinrichtung 100 sind auf einer Trägereinheit 15 linear angeordnet, die in diesem Fall als Platine 27 ausgeführt ist. Dabei sind die Mikrofone 8 im Wesentlichen gleichmäßig auf der Platine verteilt. Insbesondere weisen die Mikrofone 8 bevorzugt gleichmäßige Abstände zueinander auf.

Auch eine zwei- oder dreidimensionale Anordnung der Mikrofone kann vorteilhaft sein. Dabei müssen die Mikrofone auch nicht gleichmäßig verteilt sein. Durch eine mehrdimensionale Anordnung der Mikrofone ist zum Beispiel auch eine vertikale Richtcharakteristik möglich, wobei bei einer linearen Anordnung der Mikrofone eine rotatorische Charakteristik entsteht.

Die Platine 27 ist in einem Gehäuse 16 angeordnet. Das Gehäuse dient dem Schutz vor äußeren Einwirkungen, die sich schädlich auf die Messeinrichtung 100 auswirken können. Insbesondere kann das Gehäuse gegen schädliche Eingriffe durch zum Beispiel Tiere, aufgewirbelte Gegenstände oder Wettereinflüsse ausgelegt sein.

Insgesamt ist eine wetterfeste Installation von großem Vorteil. Dazu kann die offene Frontseite des Gehäuses 16, durch die der Schall zu den Mikrofonen 8 gelangt, durch eine wetterfeste Einrichtung zum Beispiel vor Feuchtigkeit geschützt werden. Im einfachsten Fall kann dazu eine Klarsichtfolie geeignet sein. Natürlich sind auch speziell angefertigte Abdeckungen aus einem zum Beispiel wetterfesten aber natürlich im Wesentlichen schalldurchlässigen Material möglich und bevorzugt.

Die Signalleitungen 34 der einzelnen Mikrofone 8 sind so miteinander verschaltet, dass die Einzelsignale 9 der Mikrofone 8 zu einem gemeinsamen Ausgangssignal 7 vereint werden und auf einer einzigen gemeinsamen Signalleitung 10 enden. Die Verschaltung der Mikrofone 8 kann zum Beispiel über Kondensatoren 28 erfolgen. Im einfachsten Fall können die Drähte der Signalleitungen 34 der Mikrofone 8 aber auch einfach miteinander "verzwirbelt" werden.

Durch die hardwaremäßige Zusammenschaltung der einzelnen Mikrofone 8 entfallen erhebliche Kosten für die Installation, da ein nachträgliches Vereinen der Einzelsignale 9 über zum Beispiel Beamforming durch diese spezielle Art der Verschaltung ersetzt wird. Beim Beamforming würde für jedes Mikrofon eine eigene Signalleitung benötigt, für die jeweils auch ein separater Analog-Digital-Wandler 11 erforderlich wäre.

Da die Mikrofone 8 bei einer erfindungsgemäßen Messeinrichtung 100 auf nur einer gemeinsamen Signalleitung 10 enden, ist für einen solchen Aufbau auch lediglich ein Analog-Digital-Wandler 11 pro Messeinrichtung 100 erforderlich.

Die analogen Signale der Mikrofone 8 einer Messeinrichtung 100 werden analog zusammen geschaltet, sodass die gemeinsame Signalleitung 10 ein gemeinsames analoges Signal der Mikrofone 8 weiterleitet. Deshalb ist eine Analyse der Signale der einzelnen Mikrofone gar nicht möglich, denn sie stehen einzeln weder bei der Messung noch zu einer späteren Auswertung zur Verfügung.

Die Richtwirkung der Messeinrichtung 100 entsteht durch die Auslöschung von Signalen durch unterschiedliche Phasenlagen 33 der Signale in den Mikrofonen 8. Dadurch werden Signale, die nicht direkt von vorne in ein Mikrofon 8 strahlen durch die unterschiedliche Phasenlage in den anderen Mikrofonen 8, in die sie seitlich einstrahlen, ausgelöscht.

Fig.3 zeigt eine erfindungsgemäße Vorrichtung 1 zur Ermittlung des Schallemissionspegels 2 eines vorbeifahrenden Zuges 23 in einer schematischen Draufsicht. Man sieht einen Bereich einer Gleisstrecke 22, der mit einer erfindungsgemäßen Vorrichtung 1 ausgestattet ist. Die Messeinrichtung 100 ist dabei allerdings nicht in einer Draufsicht dargestellt, damit man die Mikrofone 8 erkennen kann. Diese würden natürlich im richtigen Einsatz nicht nach oben zeigen, sondern auf die Schienen 24 bzw. auf die vorbeifahrenden Räder 3 gerichtet sein.

Der Abstand der Messeinrichtung 100 von den Schienen 24 hängt von der Länge der zu erfassenden Strecke 17 ab. Die Messeinrichtung 100 weist je nach Anzahl und Abstand der Mikrofone 8 einen bestimmten Erfassungswinkel alpha auf. Je nach Abstand der Installation zu einem Gleis 22 müssen daher unterschiedlich lange oder aber mehrere Messeinrichtungen 100 verwendet werden. Bei der Verwendung mehrerer Messeinrichtungen 100 sind diese bevorzugt wenigstens leicht überlappend angeordnet.

Der Bereich 17, der von der Messeinrichtung 100 erfasst werden muss, hängt dabei vom Umfang 18 des zu messenden Rades 3 ab. Damit die Schallemission 2 des gesamten Rades 3 erfasst werden kann, muss auch die Geräuschentwicklung über den gesamten Umfang 18 gemessen werden. Dazu muss der Kontakt der gesamten Lauffläche 21 des Rades 3 auf der Schiene 24 detektiert werden.

Der Umfang 18 bzw. die Lauffläche 21 des Rades 3 ist in Figur 3 schematisch in einer "abgerollten" Darstellung gezeigt, um den Bereich 17, der abgedeckt werden muss, besser zu verdeutlichen.

Aus der Messeinrichtung 100 verläuft eine gemeinsame Signalleitung 10, die das Ausgangssignal 7 der Messeinrichtung 100 der Analyseeinrichtung 6 zur Verfügung stellt. Zwischen Messeinrichtung 100 und Analyseeinrichtung 6 ist ein Analog-Digital-Wandler 11 geschaltet, der das analoge Ausgangssignal 7 in ein digitales Ausgangssignal 7 umwandelt, das von der Analyseeinheit 6 verarbeitet werden kann.

Eine Auslöseeinheit 19 steht mit dem Analog-Digital-Wandler 11 in Verbindung, um einen Zug 23 bzw. ein vorbeifahrendes Rad 3 anzukündigen. Die Auslöseeinheit 19 kann aber auch mit der Analyseeinrichtung 6 verbunden sein. Hier ist die Auslöseeinheit ein System aus zwei Lichtschranken 26. Dadurch kann auch die Geschwindigkeit des Zuges ermittelt werden. Dies ist ermöglicht eine besonders gute Differenzierung einzelner Räder und hilft insbesondere, wenn ein Fahrzeug nicht mit einer konstanten Geschwindigkeit an der Messeinrichtung 100 vorbei fährt.

Die Analyseeinrichtung 6 umfasst eine Auswerteeinheit 12 und eine Steuereinheit 13. Diese Einheiten 12, 13 sind nicht näher dargestellt. Im einfachsten Fall kann die Aufgabe der Steuereinheit 13 und der Auswerteinheit 12 von einem Computer 29 übernommen werden.

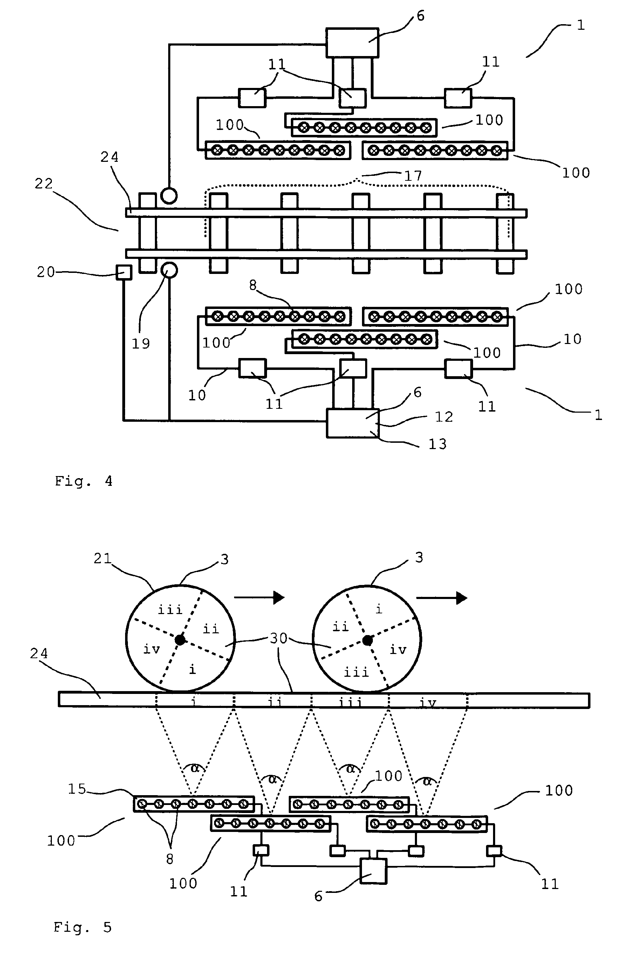

Auch Fig. 4 zeigt eine erfindungsgemäße Installation einer Vorrichtung 1 zur Ermittlung des Schallemissionspegels 2 eines vorbeifahrenden Zuges 23 in einer schematischen Draufsicht. Man sieht wie in Fig. 3 einen Bereich einer Gleisstrecke 22, der mit einer erfindungsgemäßen Vorrichtung 1 ausgestattet ist. Dabei sind in dem hier gezeigten Beispiel allerdings auf jeder Seite der Gleisstrecke 22 drei Messeinrichtungen 100 vorgesehen, die wieder nicht in einer Draufsicht dargestellt sind, damit man die Mikrofone 8 erkennen kann.

Die Verwendung mehrerer überlappend angeordneter Messeinrichtungen 100 erlaubt es unter anderem, einen bestimmten Bereich 17 aus verschiedenen Entfernungen mit standardisierten Messeinrichtung 100 abzudecken. Dabei kann eine solche Messeinrichtung 100 mit einer vorbestimmten Anzahl an Mikrofonen 8 vorgesehen sein.

Bei einer Veränderung des Abstandes der Messeinrichtung 100 zu den Bahnschienen 24 oder bei einer Änderung in der Länge des abzudeckenden Bereichs 17 müsste normalerweise die Länge der Messeinrichtung variiert werden. Durch die Verwendung überlappend angeordneter Messeinrichtungen 100 kann dies vermieden werden.

Durch eine variable Verschaltung der einzelnen Mikrofone 8 in den einzelnen Messeinrichtungen 100 können weiterhin in bevorzugten Ausgestaltungen nur ausgewählte Mikrofone 8 einzelner Messeinrichtungen 100 für die Detektion eines Schallemissionspegels 2 verwendet werden.

Die gemeinsamen Signalleitungen 10 der einzelnen Messeinrichtungen 100 werden jeweils einem Analog-Digital-Wandler 11 zugeführt und anschließend mit der Analyseeinrichtung 6 verbunden.

Ein Trigger 25, der die Messung auslösen und gleichzeitig die Geschwindigkeit des vorbeifahrenden Fahrzeuges ermitteln kann, ist in dem hier gezeigten Beispiel mit der Analyseeinrichtung 6 verbunden. Genauer gesagt erfolgt die Auslösung des Messvorgangs über die Steuereinrichtung 13.

Zusätzlich ist in dem hier gezeigten Ausführungsbeispiel noch eine Einrichtung 20 zur Identifizierung des vorbeifahrenden Fahrzeugs 4 vorgesehen. Auch diese Einrichtung 20 steht mit der Analyseeinrichtung 6 in Verbindung. Die Einrichtung 20 zur Identifizierung des vorbeifahrenden Fahrzeugs 4 kann zum Beispiel als Barcodescanner ausgebildet sein, der über einen an den Waggons vorgesehen Barcode die Messwerte bestimmten Fahrzeugabschnitten zuweisen kann. Auch andere Methoden zur Identifizierung sind denkbar und können in vorteilhaften Ausgestaltungen verwirklicht werden.

In Fig. 5 ist in einer stark schematischen Darstellung die Detektion der Geräuschemission einzelner Räder 3 abgebildet. Dabei wird bevorzugt jeweils die gesamte Lauffläche 21 eines Rades 3 durch erfindungsgemäße Messeinrichtungen 100 erfasst. Dazu sind die beiden gezeigten Räder 3 zur besseren Veranschaulichung in Sektoren 30 aufgeteilt, die zur besseren Übersichtlichkeit als i-iv in die Räder eingezeichnet sind und entsprechend auch auf der Schiene 24 dargestellt sind.

Die gezeigten Messeinrichtungen 100 sind in dem hier gezeigten Ausführungsbeispiel mit jeweils sieben Mikrofonen 8 ausgestattet. Durch den Erfassungswinkel alpha der einzelnen Messeinrichtungen 100, der in diesem Fall 30° beträgt, kann von jeder Messeinrichtung 100 nur ein bestimmter Bereich der Schiene 24 detektiert werden. Dabei entspricht in dem hier gezeigten Fall der abgedeckte Bereich einer Messeinrichtung 100 der Länge der Lauffläche 21 eines Sektors i - iv.

In dem hier gezeigten Ausführungsbeispiel ist der Abstand der Messeinrichtungen 100 zu den Schienen 24 so gewählt, dass die gesamte Lauffläche 21 eines vorbeifahrenden Rades während des Schienenkontakts detektiert werden kann.

Rollt ein Rad 3 in Pfeilrichtung über den Messbereich 17 der Messeinrichtung 100, misst die erste Messeinrichtung 100 den Sektor i der Lauffläche 21 des Rades 3, die zweite Messeinrichtung 100 den Sektor ii der Lauffläche 21 und für die weiteren Messeinrichtungen entsprechend.

Dadurch wird die Geräuschentwicklung der gesamten Lauffläche 21 des Rades 3 von den Messeinrichtungen 100 erfasst. Hieraus wird es unter anderem auch möglich, Schäden an einem Rad zu erkennen, da sich zum Beispiel Abflachungen in der Lauffläche 21 durch eine erhöhte Geräuschentwicklung auszeichnen. Mit einer Vorrichtung gemäß der vorliegenden Erfindung wird zwar primär ein Schallemissionspegel bestimmt, allerdings wird nicht nur ein Pegel, sondern ein Geräusch aufgenommen. Dadurch kann über die Auswertung des Geräusches unter Umständen sogar eine Schadensdiagnose erfolgen. Auch Geräusche durch eine Riffelung der Lauffläche, wie sie beispielsweise bei der Verwendung von Bremsklötzen aus Grauguss entsteht, kann so leicht detektiert werden.

In Figur 5 ist noch ein weiterer Vorteil der Verwendung mehrerer Messeinrichtungen 100 dargestellt. In der gezeigten Anordnung erfassen vier Messeinrichtungen 100 den Messbereich 17, der aus sich aus den Sektoren i-iv zusammensetzt. Je nach Fahrzeug können allerdings zwei bzw. mehrere Räder 3 sehr dicht aneinander angeordnet sein, wodurch sie sich gleichzeitig im Messbereich 17 aufhalten können. Dies kann zum Beispiel bei einem Drehgestell 38 oder aber auch bei zwei Achsen 37 benachbarter Waggons 36 der Fall sein.

Dadurch könnte man die Schallemission 2 zweier benachbarter Räder 3 mit nur einer Messeinrichtung 100 nicht differenzieren. Die Mikrofone 8 der nur einen Messeinrichtung 100 würden wenigstens zeitweise die Schallemission 2 beider Räder 3 gleichzeitig detektieren. Dies ist insbesondere bei Rädern 3 unterschiedlicher Waggons 36 nachteilig, da diese unterschiedlichen Betreibern gehören können.

Sind allerdings mehrere Messeinrichtungen 100 vorgesehen, wird in dem gezeigten Beispiel das Rad 3, das gerade in Sektor i einrollt, von einer anderen Messeinrichtung 100 erfasst, als das Rad 3, das gerade den Sektor iii verlässt. Durch die Auslöseeinrichtung 19 und die ermittelte Geschwindigkeit können so die gemessenen Emissionen aus den einzelnen Sektoren 30 bei der Emissionsbestimmung eines einzelnen Rades 3 berücksichtigt werden. Dadurch können auch sehr dicht aneinander liegende Schallquellen 31 gut aufgelöst werden.

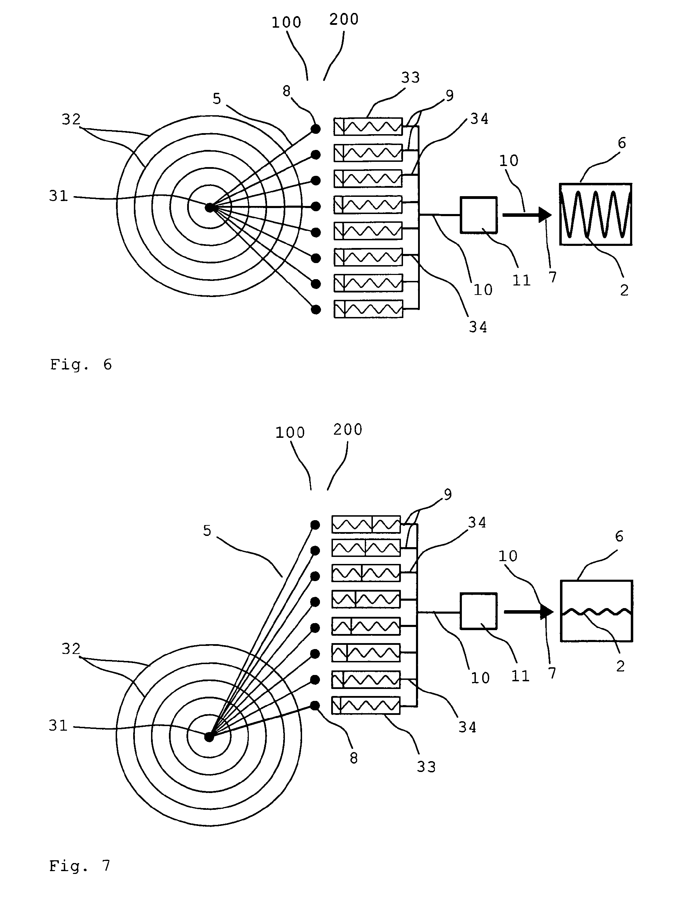

In den Figuren 6 und 7 ist in einer schematischen Darstellung das Prinzip der Richtwirkung der Messeinrichtung 100 durch die hardwaremäßige Verschaltung der einzelnen Mikrofone 8 dargestellt.

In Figur 6 wird ein Eingangssignal 5 von einer Schallquelle 31 abgestrahlt. Die Schallquelle 31 ist direkt vor dem vierten Mikrofon 8 von oben aufgestellt. Der Verlauf der Schallwellen 32 ist durch die von der Schallquelle 5 ausgehenden Kreise dargestellt.

Die Schallwellen 32 werden von den Mikrofonen 8 aufgenommen, wobei die einzelnen Mikrofone 8 die Schallwellen 32 der kreisförmigen Ausbreitung entsprechend leicht versetzt detektieren. Durch diese Laufzeitdifferenz kommt es zu unterschiedlichen Phasenlagen 33. Durch das Zusammenführen der über die Signalleitungen 34 der Mikrofone 8 ausgegebenen Einzelsignale 9 kann es zur Auslöschung verschiedener Phasenlagen 33 kommen, da sich Amplituden mit entgegengesetzter Phasen auslöschen.

Daraus entsteht die Richtwirkung der erfindungsgemäßen Messeinrichtung 100, da nur bzw. überwiegend die Signale, die frontal in ein Mikrofon 8 gelangen, erhalten bleiben. Die Einstrahlung von seitlichen neben der Messeinrichtung 100 abgestrahlten Geräuschen in die Mikrofone 8 wird durch die verschiedenen Phasenlagen 33 für das Ausgangssignal 7 nicht bzw. nicht wesentlich berücksichtigt. Diese Richtwirkung wird durch die hardwaremäßige Aufeinanderschaltung der einzelnen Mikrofone erreicht.

Die einzelnen Signalleitungen 34 der Mikrofone 8 werden in dem in Fig. 6 gezeigten Ausführungsbeispiel zu einer einzigen gemeinsamen Signalleitung 10 zusammengeschaltet. Dadurch werden die Einzelsignale 9 der Mikrofone 8 zu einem gemeinsamen Ausgangssignal 7 vereint und dem Analog-Digital-Wandler 11 zugeführt. Von dort aus wird das gemeinsame Ausgangssignal 7 über die gemeinsame Signalleitung 10 weiter an die Analyseeinheit übermittelt wird.

Figur 7 entspricht vom Aufbau Figur 6. Dabei ist allerdings die Schallquelle 31 neben der Messeinrichtung 100 positioniert. Dadurch wird der Schallemissionspegel der Schallquelle 31 nahezu nicht im Ausgangssignal 7 berücksichtigt, da die Einzelsignale 9 der einzelnen Mikrofone 8 durch die unterschiedlichen Phasenlagen 33 bei der Zusammenlegung der Signale 9 zu einem Ausgangssignal 7 ausgelöscht werden.

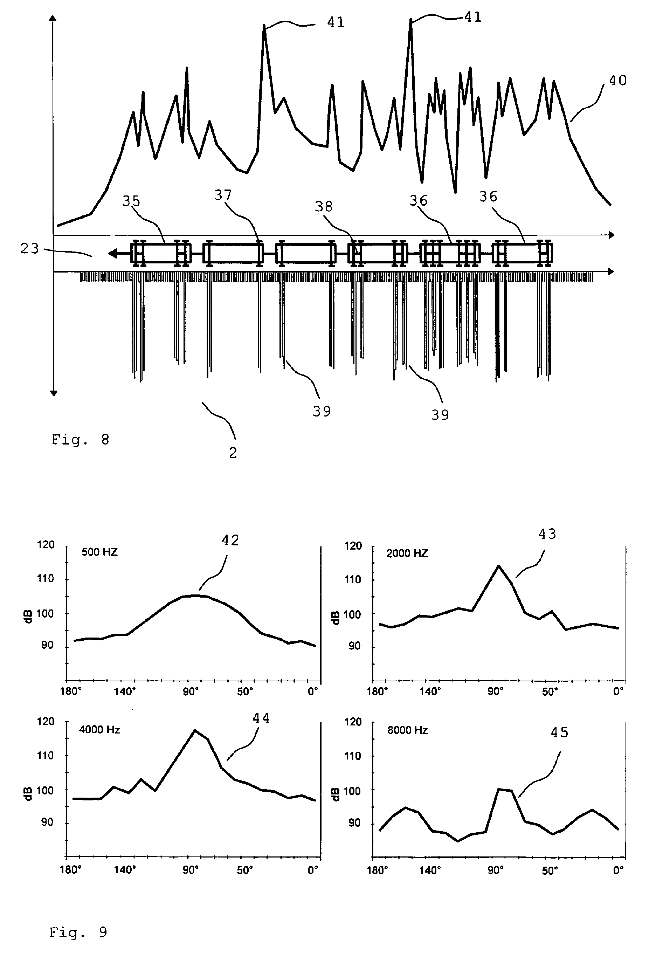

Figur 8 zeigt beispielhaft die Anzeige einer Messung eines Zuges 23 mit einem Zugfahrzeug 36 und fünf angehängten Waggons 37. Die Wagen können auf einzelnen Achsen 38 oder auf Drehgestellen 39 gelagert sein. Die Fahrtrichtung des Zuges 23 ist durch einen Pfeil angedeutet.

Im Diagramm unter dem Zug 23 ist die Geräuschmessung, also der Schallemissionspegel 2, der vorbeifahrenden Waggons bzw. der einzelnen Räder 3 aufgetragen. Die Ausschläge 40 entsprechen dabei den Positionen der Räder 3 des Zuges 23. Die Werte könnten dabei zum Beispiel in auf einer dB-Skala angezeigt werden.

Im Diagramm oberhalb des Zuges ist der quadratische Mittelwert der gemessen Werte, also der RMS-Effektivwert 41, aufgetragen. Diese Darstellung eignet sich besonders zur effektiven Auswertung der gemessenen Daten. Über die Peaks 41 der Kurve der Effektivwerte 41 können dann beispielsweise sogar Rückschlüsse über Schäden an einem Rad 3 gezogen werden. Überschreitet ein Wert einen vorbestimmten Maximalwert, deutet dies auf einen Schaden am Rad 3 hin, der sich zum Beispiel in Form einer starken Abflachung der Lauffläche widerspiegeln kann.

In Fig. 9 ist anhand von vier Kurven 42-45 die Richtwirkung der erfindungsgemäßen Messeinrichtung 100 gezeigt. Dabei spiegeln die Werte einen Versuch mit einer Messeinrichtung 100 wieder, die 48 Mikrofone umfasst.

Die Messung der Terzbänder 250 Hz bis 10.000 Hz wurden ausgewertet. Die Terzbänder 500 Hz, 2.000 Hz, 4.000 Hz und 8.000 Hz sind in den Kurven 42-45 dargestellt.

Es wurde für jedes Terzband die Signalintensität abhängig von der Position der Schallquelle zu der Messeinrichtung 100 gemessen. Dabei ist die Richtwirkung der Messeinrichtung 100 für jedes Terzband deutlich zu erkennen. Die stärkste Signalintensität wird jeweils in einer Orientierung von 90°, also frontal vor der Messeinrichtung erreicht. Das zeigt, dass Signale, die aus seitlicher Richtung in die Messeinrichtung 100 einstrahlen, sich durch die Laufzeitdifferenz der Schallwellen und die daraus resultierenden Phasenlagen abschwächen. Besonders bevorzugt ist in allen Ausgestaltungen der Erfindung, dass das Verfahren zur Ermittlung des Schallemissionspegels 2 reproduzierbar und auf bestimmte Normen abgestimmt ist. Insbesondere eine Vergleichbarkeit zu der Emissionsmessung gemäß DIN EN ISO 3095 ist dabei sinnvoll und gewünscht. Dazu kann parallel zu der Messung mittels einer oder mehrerer Messeinrichtungen 100 eine zusätzliche Messung gemäß der Emissionsnorm erfolgen, um den gemessenen Schallemissionspegel 2 eines einzelnen Rades 3 in Bezug zu einem gemessenen Gesamtpegel des Fahrzeuges zu bewerten.

Die zuvor beschriebene Vorrichtung 1 zur Ermittlung des Schallemissionspegels 2 von vorbeifahrenden Fahrzeugen 4 kann des Weiteren in bevorzugten Weiterbildungen auch dazu genutzt werden, die Schallemission der Ladung eines vorbeifahrenden Fahrzeuges zu detektieren. Auch die Schallemission von verschiedenen Anbauteilen eines Fahrzeugs 4, wie zum Beispiel einer Klimaanlage, kann so durch die erfindungsgemäße Vorrichtung ermittelt werden.

Es liegt weiter im Rahmen des Könnens eines Fachmanns, die beschriebenen Ausführungsbeispiele in nicht dargestellter Weise abzuwandeln, um die beschriebenen Effekte um erzielen, ohne dabei den Rahmen der Erfindung zu verlassen.

### Bezugszeichenliste:

- 1: Vorrichtung
- 2: Schallemissionspegel
- 3: Rad
- 4: mehrachsiges Fahrzeug
- 5: Eingangssignal
- 6: Analyseeinrichtung
- 7: Ausgangssignal
- 8: Mikrofon
- 9: Einzelsignal
- 10: gemeinsame Signalleitung
- 11: Analog-Digital-Wandler
- 12: Auswerteeinheit
- 13: Steuereinheit
- 14: Kondensator
- 15: Trägereinheit
- 16: Gehäuse
- 17: abgedeckter Bereich
- 18: Umfang eines Rades
- 19: Auslöseeinheit
- 20: Einrichtung zur Identifizierung von Fahrzeugen
- 21: Lauffläche
- 22: Gleisstrecke
- 23: Zug
- 24: Schiene
- 25: Trigger
- 26: Lichtschranke
- 27: Platine
- 28: Kondensator
- 29: Computer
- 30: Sektor
- 31: Schallquelle
- 32: Schallwelle
- 33: Phasenlage
- 34: Signalleitung
- 35: Zugwagen
- 36: Waggon
- 37: Achse
- 38: Drehgestell
- 39: Ausschlag
- 40: Effektivwert
- 41: Peak
- 42: Kurve
- 43: Kurve
- 44: Kurve
- 45: Kurve

- 100: Messeinrichtung
- 200: Mikrofonarray alpha Erfassungswinkel

## Patentansprüche

1. Vorrichtung (1) zur Ermittlung des Schallemissionspegels (2) einzelner Räder (3) eines vorbeifahrenden mehrachsigen Fahrzeugs (4), umfassend wenigstens eine Messeinrichtung (100) zum Erfassen eines Eingangssignals (5) und wenigstens eine Analyseeinrichtung (6) zur Auswertung eines von der Messeinrichtung (100) ausgegebenen Ausgangssignals (7),
**dadurch gekennzeichnet,**
**dass** die Messeinrichtung (100) wenigstens zwei Mikrofone (8) umfasst, deren Signalleitungen (34) so miteinander verschaltet sind, dass die von den Mikrofonen (8) ausgegebenen Einzelsignale (9) zu einem gemeinsamen Ausgangssignal (7) vereint auf einer einzigen gemeinsamen Signalleitung (10) enden, die mit der Analyseeinrichtung (6) in Verbindung steht.

2. Vorrichtung (1) nach Anspruch 1, wobei mehrere Messeinrichtungen (100) zum Erfassen eines Bereichs (17) vorgesehen sind, die insbesondere überlappend angeordnet sind.

3. Vorrichtung (1) nach einem der vorhergehenden Ansprüche, wobei zwischen der Messeinrichtung (100) und der Analyseeinrichtung (6) ein Analog-Digital-Wandler (11) vorgesehen ist.

4. Vorrichtung (1) nach einem der vorhergehenden Ansprüche, wobei die ausgegebenen Einzelsignale (9) der Mikrofone (8) über wenigstens einen Kondensator (14) aufeinander geschaltet sind.

5. Vorrichtung (1) nach einem der vorhergehenden Ansprüche, wobei ein frequenzabhängiger Erfassungswinkel (alpha) durch den Abstand der einzelnen Mikrofone (8) der Messeinrichtung (100) zueinander definierbar ist.

6. Vorrichtung (1) nach einem der vorhergehenden Ansprüche, **dadurch gekennzeichnet, dass** die Mikrofone (8) der Messeinrichtung (100) im Wesentlichen linear angeordnet sind.

7. Vorrichtung (1) nach einem der vorhergehenden Ansprüche, **dadurch gekennzeichnet, dass** die Mikrofone (8) einen gleichmäßigen Abstand zueinander aufweisen.

8. Vorrichtung (1) nach einem der Ansprüche 1-6, **dadurch gekennzeichnet, dass** die Mikrofone (8) der Messeinrichtung (100) zweidimensional angeordnet sind.

9. Vorrichtung nach einem der vorhergehenden Ansprüche, wobei wenigstens eine Messeinrichtung (100) höhenversetzt zu wenigstens einer anderen Messeinrichtung (100) angeordnet ist.

10. Vorrichtung (1) nach einem der vorhergehenden Ansprüche, wobei der von der Messeinrichtung (100) abgedeckte Bereich (17) wenigstens dem Umfang (18) des zu messenden Rades (3) entspricht.

11. Vorrichtung (1) nach einem der vorhergehenden Ansprüche, wobei dem Analog-Digital-Wandler (11) und/oder der Steuereinheit (12) eine Auslöseeinheit (19) zugeordnet ist.

12. Vorrichtung (1) nach einem der vorhergehenden Ansprüche, wobei der Analyseeinrichtung (6) eine Einrichtung zur Identifizierung des zu messenden Fahrzeugs (20) zugeordnet ist.

13. Verfahren zur Ermittlung des Schallemissionspegels (2) einzelner Räder (3) eines vorbeifahrenden mehrachsigen Fahrzeugs (4) mit einer Vorrichtung (1), die wenigstens eine Messeinrichtung (100) mit wenigstens zwei Mikrofonen (8) zum Erfassen eines Eingangssignals (5) und wenigstens eine Analyseeinrichtung (6) zur Auswertung eines von der Messeinrichtung (100) ausgegebenen Ausgangssignals (7) umfasst,
wobei der Schallemissionspegel (2) wenigstens eines einzelnen Rades (3) von den Mikrofonen (8) erfasst wird und die über die Signalleitungen (34) der Mikrofone (8) ausgegebenen Einzelsignale (9) zu einem gemeinsamen Ausgangssignal vereint werden, das über eine einzige gemeinsame Signalleitung (11) an die Analyseeinheit (6) übermittelt wird.

14. Verfahren nach Anspruch 13, wobei der Schallemissionspegel der im Wesentlichen gesamten Lauffläche (21) wenigstens eines Rades (3) erfasst wird.

15. Messeinrichtung (100) umfassend wenigstens eine Trägereinheit (15) und darauf angeordnet wenigstens eine Mehrzahl von Mikrofonen (8) zum Erfassen eines Eingangssignals (5), wobei die Signalleitungen (34) der Mikrofone (8) so miteinander verschaltet sind, dass die ausgegebenen Einzelsignale (9) zu einem gemeinsamen Ausgangssignal (7) vereint werden, das auf einer einzigen gemeinsamen Signalleitung (11) endet.
